# EUROPÄISCHE PATENTSCHRIFT

(11) **EP 2 159 357 B1**
(45) Veröffentlichungstag und Bekanntmachung des Hinweises auf die Patenterteilung: **19.10.2011**
(21) Anmeldenummer: 09165908.6
(22) Anmeldetag: 20.07.2009
(51) Int. Cl.: E05C 17/30, E05C 9/08, B60J 1/16

(54) **Vorgehängtes Fenster an einem Wohnwagen, einem Wohnmobil und dgl.**
Pre-hung window on a caravan, caravan and similar
Fenêtre suspendue sur une caravane, un mobil-home ou analogue

(30) Priorität: 29.08.2008 DE 102008044891
(43) Veröffentlichungstag der Anmeldung: 03.03.2010
(73) Patentinhaber: Dometic Seitz GmbH, 74238 Krautheim (DE)
(72) Erfinder: Neubauer, Reinhard, 97084 Würzburg (DE)
(74) Vertreter: Grosse, Wolfgang

(56) Entgegenhaltungen:
- EP-A1- 1 574 646
- EP-A2- 1 747 927
- EP-A2- 1 813 750
- DE-A1- 2 724 149
- DE-A1- 3 622 764
- DE-A1- 19 725 677

## Beschreibung

Die Erfindung bezieht sich auf ein vorgehängtes Fenster an einem Wohnwagen, Wohnmobil und dgl. Alle diese Anwendungsmöglichkeiten werden zusammengefasst mit dem Begriff Wohnwagen eingeschlossen.

Ein Fenster, das z. B. die Merkmale des Oberbegriffs des Anspruchs 1 aufweist, geht aus einem internen Stand der Technik der Anmelderin hervor. Nachteilig ist, dass ein Aufklappen des Fensters nur um eine obere scharnierartige Achse des Fensters möglich ist und damit bei einer einzig möglichen, standardmäßigen Offenstellung des schrägestellten Fensters nur ein beschränkter Luftaustausch zwischen Wohnwageninnenseite und Umgebung möglich ist.

Bei einer Klappenanordnung nach der EP 1 813 750 A2 wird eine bessere Möglichkeit des Luftaustausches geschaffen, da die Klappe sich weit öffnen lässt, jedoch ist eine Öffnungsbegrenzungsvorrichtung erforderlich, die empfindlich ist und sorgfältig zu bedienen ist. Das geöffnete und mit der Begrenzungsvorrichtung festgelegte Fenster kann jedoch auch leicht zu Unfällen führen, wenn eine Person nahe an der Wand des Wohnwagens entlang geht.

Es besteht also ein Bedürfnis, eine Fensteranordnung, wie z. B. ein vorgehängtes Fenster an einem Wohnwagen zu haben, das den Fensterausschnitt in der Wand des Wohnwagens in hohem Maße freigibt, ohne dabei ein Hindernis auf der Außenseite des Wohnwagens darzustellen.

Die Aufgabe der Erfindung besteht darin, diesem Bedürfnis gerecht zu werden.

Die Lösung dieser Aufgabe besteht ausgehend von einem gattungsgemäßen, vorgehängten Fenster darin, dass vier Handverriegelungen vorgesehen sind, die die Schließstellung des Fensters für den vorbestimmten Anpressdruck sicherzustellen vermögen, dass bei Lösung aller vier Handverriegelungen mindestens die standardmäßige Offenstellung des Fensters vorliegt, bei der zudem vorgesehen ist, dass die Ebene des Fensters parallel zur Ebene der Wohnwagenwand sich befindet, und dass erste Verschiebe-Mittel in Bezug auf der Innenseite des Fensters und zweite, mit erstem Mittel zusammenarbeitende, Verschiebe-Mittel in Bezug auf die Außenseite der Wohnwagenwand bereitgestellt sind, wobei jedoch beide außerhalb des Fensterausschnittes der Wohnwagenwand vorgesehen sind, durch die ausgehend von der standardmäßigen Offenstellung ein paralleles Verschieben des Fensters seitlich nach rechts oder links ermöglicht wird, bis fast 90% bis 100% des Fensterausschnittes der Wohnwagenwand freigegeben sind.

Mit der Erfindung ist es also nicht nur möglich, eine standardmäßige Offenstellung des Fensters, wobei das Fenster ca. 6 cm bis 7 cm von der Wohnwagenwand absteht, zu erhalten, sondern es kann das Fenster nach rechts oder links bis zu einem maximalen Bereich, verschoben werden, bis zu bis 100% des Fensterausschnittes in der Wohnwagenwand freigegeben sind. Da das Fenster nur bis zu 7 cm von der Wohnwagenwand absteht, sind Unfälle, wie sie bei einer offenen Klappe auftreten können, kaum vorstellbar. Nach der Erfindung gibt es also eine standardmäßige Offenstellung, wenn die vier Handverriegelungen gelöst sind und durch die ersten und zweiten Verschiebemittel, die dem Fenster bzw. der Wohnwagenwand zugeordnet sind können gegenüber der standardmäßigen Offenstellung eine linke und eine rechte Offenstellung erreicht werden, die je ein Maximum von Luftaustausch zwischen dem Wohnwagen und der Umgebung ermöglichen.

Für die linke bzw. die rechte Offenstellung kann eine Begrenzung durch ein Begrenzungsmittel vorgesehen sein. Selbstverständlich kann auch die standardmäßige Offenstellung bestimmt sein, indem eine Einrastung eine Verschiebung nach links oder rechts erschwert.

Wie bei der Erfindung angegeben, steht das erste Verschiebemittel mit dem Fenster in Verbindung und das zweite Verschiebemittel steht mittelbar mit der Wohnwagenwand in Verbindung. Soweit nun das Fenster über einen als insgesamt anzusehenden (federunterstützten) Schwenkmechanismus in die standardmäßige Offenstellung gebracht wird, so hat es sich als zweckmäßig erwiesen, den Schwenkmechanismus in Form von vier federunterstützten Einzelschwenkmechanismen auszubilden und sowohl zwei der oberhalb des Fensterausschnittes befindlichen einzelschwenkmechanismen und zwei unterhalb des Fensterausschnittes befindlichen Einzelschwenkmechanismen mit den zweiten Verschiebemittel zu verbinden. Das zweite Verschiebemittel könnte z. B. ein Schienen - Innenteil sein, das von einem weiteren Schienenteil (Mittelteil) um griffen wird.

Die gegenüber zwei gedachten, durch den Mittelpunkt des Fensterausschnittes hindurch tretenden Achsen, symmetrisch angeordneten Einzelschwenkmechanismen führen unter anderem auch dazu, dass die zweifach vorliegenden Verschiebemittel (7a und b; 8a und b) unter sich parallel sind und demgemäß das parallele Verschieben des Fensters ausgehend von der standardmäßigen Offenstellung in die linke oder rechte Offenstellung ermöglichen.

Die Ausbildung der Verschiebemittel kann verschiedenartig erfolgen. Es hat sich als zweckmäßig erwiesen, wenn die Verschiebemittel als Profilschienen gebildet sind. Zusammen mit einer weiteren Profilschienen kann ein insgesamt Teleskopartiges Verbindungsmittel geschaffen wurden, das die exakte seitliche Verschiebung des Fensters auszuführen gestattet. Die Profilschienen können sich gleitend umgreifen. Z. B. wird eine Innenteil- Schiene von einer Mittelteil- Schiene und die Mittelteil- Schiene von einer Außenteil - Schiene um griffen. Z. B. kann die Außenteil - Schiene dem Fenster als erstes Verschiebemittel und die Innenteil - Schiene den Einzelschwenkmechanismen zugeordnet werden.

Das erfindungsgemäße, vorgehängte Fenster kann auch einzelmotorisch betätigt werden, wobei im Bereich der linearen Verschiebemittel sich ein Linearmotor als zweckmäßig erweist. Die Motore können auf elektrischer, hydraulischer oder pneumatischer Basis arbeiten.

Die Erfindung wird nunmehr anhand eines Ausführungsbeispieles näher erläutert.

Es zeigen:
- Fig. 1: schematische Perspektivdarstellungen eines erfindungsgemä- ßen Fensters in geschlossenem Zustand und zwar nach Fig. 1a von außerhalb und nach Fig. 1b von innerhalb des Wohn- wagens,
- Fig. 2: schematische Perspektivdarstellungen des Fensters nach Öff- nen der Riegel wobei in Fig. 2a eine Gesamtansicht und Fig. 2b eine Detailansicht des rechten unteren Riegels von inner- halb des Wohnwagens erkennen lässt,
- Fig. 3a: eine teilweise im Schnitt vorgenommene, jedoch auch teilwei- se perspektivische Draufsicht auf die Wand des Wohnwagens und das Fenster in standardmäßiger Offenstellung ist,
- Fig. 3b: eine perspektivische Perspektivdarstellung des Fensters in der Offenstellung nach Fig. 3a von außerhalb des Wohnwagens ist, und
- Fig. 4: eine schematische Perspektivdarstellung des Fensters nach Verschiebung zur nahezu vollständigen Öffnung des Fenster- ausschnittes des Wohnwagens ist und zwar in Fig. 4a von au- ßerhalb und in Fig. 4b von innerhalb des Wohnwagens.

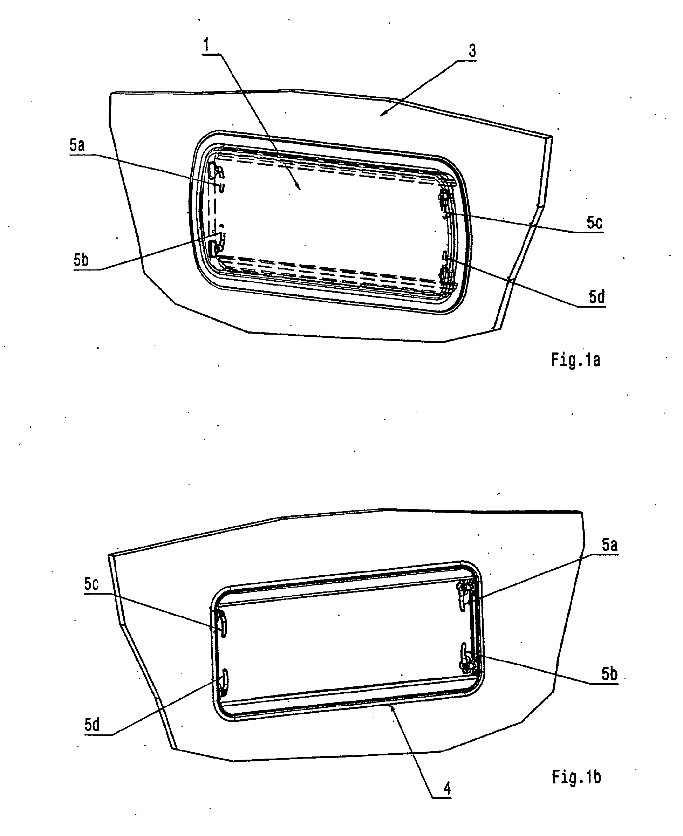

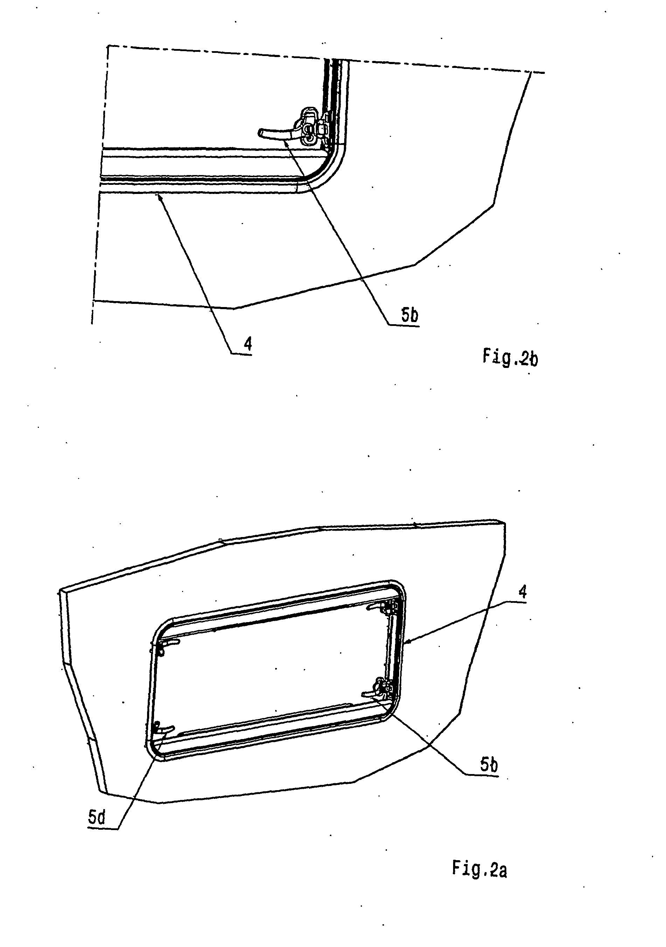

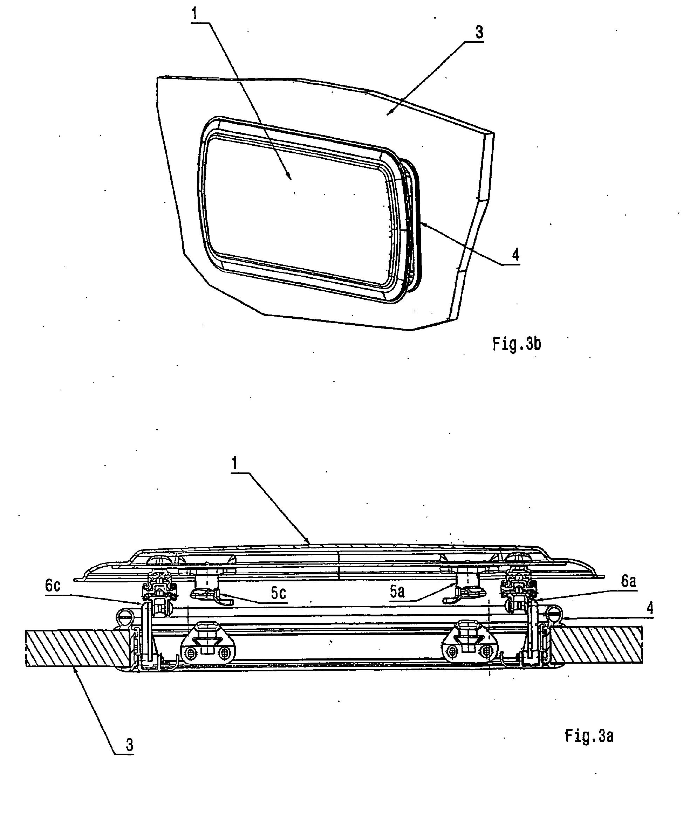

Die Figuren 1 bis 4 gehen eine Wechselbeziehung miteinander ein, so dass sie insgesamt zu beschreiben sind. Ein Fenster 1, das aus insgesamt miteinander verbundenen Kunststoffscheiben einschließlich eines Rahmens besteht und selbsttragend ist, deckt in geschlossener Stellung einen Fensterausschnitt 2 einer Wohnwagenwand 3 ab. Auf eine Dichtung 4, die bezüglich ihres Außenrandes etwas kleiner als das Fenster ist und die auch die Innenseite des Fensterausschnittes abzudecken vermag, drückt mit einem gewissen Anpressdruck der Randbereich des Fensters, soweit es sich in der durch Riegel 5a bis 5d bzw. Handverriegelungen bestimmten, geschlossenen Stellung befindet. In Fig. 1 befinden sich die Riegel in der geschlossenen Stellung. In der Fig. 2 in der geöffneten Stellung. Sobald die Riegel 5a bis 5d geöffnet sind, nimmt das Fenster 1 nach Ausübung eines kleinen Drucks auf die Riegel die standardmäßige Offenstellung nach Fig. 3 ein. Dazu dienen im Besonderen die federunterstützten Einzelschwenkmechanismen 6a bis 6d, wobei in Fig. 3a nur die Einschwenkmechanismen 6a und 6c zu erkennen sind.

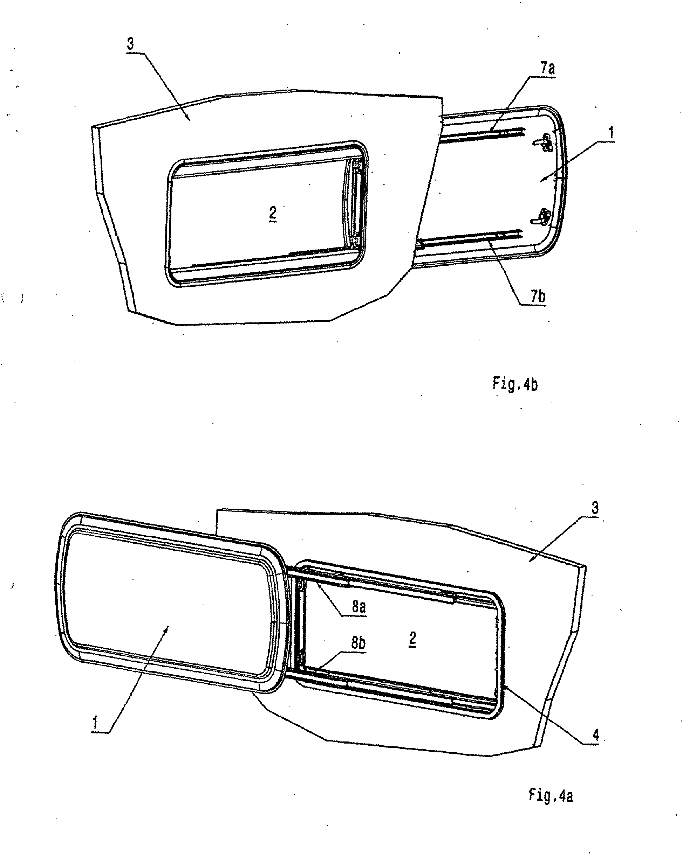

Nach Erreichen der standardmäßigen Offenstellung entsprechend der Fig. 3a und 3b kann das Fenster 1 nach rechts oder links - wie es gerade bevorzugt wird - seitlich verschoben werden bis ca. 90% bis 100% des Fensterausschnittes der Wohnwagenwand frei sind, wie dies ganz deutlich aus Fig. 4 hervorgeht und zwar in Fig. 4a von außerhalb und in Fig. 4b von innerhalb des Wohnwagens. Es kann jedoch auch jede beliebige Zwischenstellung vorgesehen werden. Sofern Stufen ausgebildet sind, können diese so eng beieinander sein, dass praktisch Stufenlosigkeit vorliegt.

Zur Verschiebung des Fensters 1 dienen Verschiebemittel 7a und 7b, die mit den Verschiebemittein 8a und 8b zusammenarbeiten. Die praktische Ausbildung der Verschiebemittel kann verschiedenartig sein. Es hat sich als zweckmäßig erwiesen, wenn die Verschiebemittel als Profilschienen gebildet sind. Zusammen mit einer weiteren Profilschiene kann ein insgesamt Teleskopartiges Verbindungsmittel geschaffen wurden, das die exakte seitliche Verschiebung des Fensters auszuführen gestattet. Die Profilschienen können sich gleitend umgreifen. Es wird die Innenteil- Schiene von einer Mittelteil- Schiene und die Mittelteil- Schiene von einer Außenteil - Schiene um griffen. Die Außenteil - Schiene wird dem Fenster 1 als erstes Verschiebemittel 7a und 7b und die Innenteil - Schiene als zweites Verschiebemittel 8a und 8b den Einzelschwenkmechanismen 6a bis 6d zugeordnet.

Das vor- gehängte Fenster 1 kann auch einzelmotorisch betätigt werden, wobei im Bereich der linearen Verschiebemittel 7a,b, 8a,b sich ein Linearmotor als zweckmäßig erweist. Die Motore können auf elektrischer, hydraulischer oder pneumatischer Basis arbeiten.

### Bezugszeichenliste

- 1: Fenster
- 2: Fensterausschnitt
- 3: Wohnwagenwand
- 4: Dichtung
- 5: Riegel 5a - 5d (Handverriegelungen)
- 6: Schwenkmechanismus (Einzelschwenkmechanismem 6a - 6d)
- 7: erste Verschiebemittel, 7a und 7b
- 8: zweite Verschiebemittel 8a und 8b

## Patentansprüche

1. Vorgehängtes Fenster an einem Wohnwagen, einem Wohnmobil und dgl., insgesamt als Wohnwagen bezeichnet, das auf der Außenseite des Wohnwagens angebracht ist und übergreifend einen gegenüber dem Fenster, das auch aus selbsttragenden miteinander verbundenen Kunststoffscheiben einschließlich Rahmenteil zu bestehen mag, und einen etwas kleineren Fensterausschnitt, der meist rechteckig mit leicht gerundeten Ecken ist, mit der Wohnwagenwand in einer Schließstellung des Fensters abdeckt, indem ein Anpressdruck gegenüber einer umlaufenden Dichtung, die im Innenausschnitt größer als der Fensterausschnitt und im Außenrand kleiner als das Fenster ist, erzeugt wird, und mit mindestens zwei Handverriegelungen, die eine Fixierung des Fensters gegenüber zwei seitlichen Wänden des Fensterausschnittes unter Aufrechterhaltung des vorgesehenen Anpressdruckes ermöglichen, sowie mit einer standardmäßigen Offenstellung des Fensters, bei der ein Luftraum zwischen den Rändern des Fensters und der Wohnwagenwand bei gelösten Handverriegelungen geschaffen wird, **dadurch gekennzeichnet, dass** vier Handverriegelungen (5a -5d) vorgesehen sind, die die Schließstellung des Fensters (1) für den vorbestimmten Anpressdruck sicherzustellen vermögen,
dass bei Lösung aller vier Handverriegelungen (5a - 5d) mindestens die standardmäßige Offenstellung (Fig. 3) des Fensters vorliegt, bei der zudem vorgesehen ist, dass die Ebene des Fensters parallel zur Ebene der Wohnwagenwand sich befindet, und dass erste Verschiebe-Mittel (7a, 7b) in Bezug auf der Innenseite des Fensters und zweite, mit erstem Mittel zusammenarbeitende, Verschiebe-Mittel (8a, 8b) in Bezug auf die Außenseite der Wohnwagenwand bereitgestellt sind, wobei jedoch beide außerhalb des Fensterausschnittes (2) der Wohnwagenwand vorgesehen sind, durch die ausgehend von der standardmäßigen Offenstellung (Fig. 3) ein paralleles Verschieben des Fensters seitlich nach rechts oder links ermöglicht wird, bis fast 90% bis 100% des Fensterausschnittes der Wohnwagenwand freigegeben sind.

2. Vorgehängtes Fenster nach Anspruch 1, **dadurch gekennzeichnet, dass** beim seitlichen Verschieben des Fensters (1) nach rechts oder links ausgehend von der standardmäßigen Offenstellung (Fig. 3) des Fensters die maximale Verschiebung durch Begrenzungsmittel, wie Bolzen od. dgl. bestimmt ist, und insbesondere die seitliche Verschieberichtung die Fahrtrichtung oder Gegenfahrtrichtung des Wohnwagens ist.

3. Vorgehängtes Fenster nach Anspruch 1 oder 2, dass das zweite Verschiebe-Mittel (8a, 8b) in Bezug auf die Außenseite des Wohnwagens durch einen federunterstützten Schwenkmechanismus (6) geführt wird, so dass in der Offenstellung des Fensters, dieses einen vorbestimmten Abstand zur Wohnwagenwand einzunehmen vermag.

4. Vorgehängtes Fenster nach Anspruch 3, **dadurch gekennzeichnet, dass** der Schwenkmechanismus aus vier federunterstützten Einzelschwenkmechanismen (6a - 6d) besteht, die jeweils in etwa in Bezug auf eine von zwei gedachten, zueinander senkrechten Achsen, die durch den Mittelpunkt des Fensterausschnitts gehen, an der Außenseite der Wohnwagenwand in etwa symmetrisch angebracht sind, so dass die zweiten Verschiebemittel (8a, 8b) zusammen mit den ersten Verschiebemitteln (7a, 7b) die seitliche Verschiebung ermöglichen.

5. Vorgehängtes Fenster nach Anspruch 1 oder 2, **dadurch gekennzeichnet, dass** das erste Verschiebemittel (7a, 7b) mit dem Fenster (1) in Verbindung steht.

6. Vorgehängtes Fenster nach Anspruch 4, **dadurch gekennzeichnet, dass** die Einzelschwenkmechanismen (6a - 6d) zusammen mit dem jeweiligen ersten und zweiten Verschiebemittel (7a, b; 8a,b) in der Schließstellung des Fensters unterhalb der umlaufenden Dichtung (4) untergebracht sind, ohne das die Dichtungsfunktion beeinträchtigt wird.

7. Vorgehängtes Fenster nach einem der vorhergehenden Ansprüche, **dadurch gekennzeichnet, dass** die ersten und zweiten Verschiebemittel (7a,b; 8a,b) durch Profil - Schienen gebildet werden

8. Vorgehängtes Fenster nach Anspruch 5 oder 7, dass die Profilschienen des ersten und zweiten Verschiebemittels durch eine weitere Profilschiene miteinander verbunden sind, um so ein insgesamt Teleskopartiges Verschiebemittel zu bilden.

9. Vorgehängtes Fenster nach Anspruch 8, **dadurch gekennzeichnet, dass** eine Innenteil - Schiene (8a, 8b), eine Mittelteil - Schiene und eine Außenteil -Schiene (7a, 7b) vorgesehen sind, wobei die Mittelteil - Schiene die Innenteil - Schiene und die Außenteilschlene die Mittelteil - Schiene gleitend umgreift.

10. Vorgehängtes Fenster nach einem der vorhergehenden Ansprüche, **dadurch gekennzeichnet, dass** je zwei der gegenüberliegenden Einzelschwenkmechanismen durch einen Stellmotor betätigbar sind.

11. Vorgehängtes Fenster nach einem der vorhergehenden Ansprüche, **dadurch gekennzeichnet, dass** die ersten und zweiten Verschiebemittel mit einem Linearmotor versehen sind.

## Claims

1. Pre-hung window on a caravan, a motor home and the like, denoted overall as a caravan, which is mounted on the outside of the caravan and which with the caravan wall in the closed position of the window overlaps and covers a window cut-out which is substantially rectangular with slightly rounded corners and is somewhat smaller than the window which may also consist of self-supporting plastic panes connected to one another including a frame part, and in that a contact pressure is produced relative to a peripheral seal which in the inner cut-out is greater than the window cut-out and the in the outer edge is smaller than window, and with at least two manual latches which enable fixing of the window relative to two lateral walls of the window cut-out while maintaining the contact pressure, and also with a standard open position of the window, wherein an air space is created between the edges of the window and the caravan wall when the manual latches are released, **characterised in that** four manual latches (5a - 5d) are provided which can ensure the closed position of the window (1) for the predetermined contact pressure, that the plane of the window is parallel to the plane of the caravan wall, and that first displacement means (7a, 7b) are provided with respect to the inside of the window and second displacement means (8a, 8b) cooperating with the first means are provided with respect to the outside of the caravan wall, wherein however both are provided outside the window cut-out (2) of the caravan wall, and by means of these displacement means a parallel displacement of the window laterally to the right or to the left starting from the standard open position (Figure 3) is made possible until almost 90% to 100% of the window cut-out of the caravan wall is cleared.

2. Pre-hung window as claimed in Claim 1, **characterised in that** when the window (1) is displaced laterally to the right or the left starting from the standard open position (Figure 3) of the window the maximum displacement is determined by limiting means, such as bolts or the like, and in particular the direction of lateral displacement is the direction of travel or contrary to the direction of travel of the caravan.

3. Pre-hung window as claimed in Claim 1 or Claim 2, **characterised in that** the second displacement means (8a, 8b) with respect to the outside of the caravan is guided by a spring-assisted pivot mechanism (6) so that the window can take up a predetermined spacing relative to the caravan wall in the open position of the window.

4. Pre-hung window as claimed in Claim 3, **characterised in that** the pivot mechanism consists of four spring-assisted individual pivot mechanisms (6a - 6d) which are each mounted approximately symmetrically on the outside of the caravan wall approximately with respect to one of two imaginary axes which are perpendicular to one another and pass through the centre point of the window cut-out, so that the second displacement means (8a, 8b) together with the first displacement means (7a, 7b) enable the lateral displacement.

5. Pre-hung window as claimed in Claim 1 or Claim 2, **characterised in that** the first displacement means (7a, 7b) is connected to the window (1).

6. Pre-hung window as claimed in Claim 4, **characterised in that** in the closed position of the window the individual pivot mechanisms (6a - 6d) together with the respective first and second displacement means (7a, b; 8a, b) are accommodated below the peripheral seal (4) without the sealing function being impeded.

7. Pre-hung window as claimed in any one of the preceding claims, **characterised in that** the first and second displacement means (7a, b; 8a, b) are formed by profiled rails.

8. Pre-hung window as claimed in Claim 5 or Claim 7, **characterised in that** the profiled rails of the first and second displacement means are connected to one another by a further profiled rail in order thereby to form an overall telescopic displacement means.

9. Pre-hung window as claimed in Claim 8, **characterised in that** an inner part rail (8a, b), a central part rail and an outer part rail (7a, 7b) are provided, wherein the central part rail engages slidably around the inner part rail and the outer part rail engages slidably around the central part rail.

10. Pre-hung window as claimed in any one of the preceding claims, **characterised in that** any two opposing individual pivot mechanisms can be actuated by a servomotor.

11. Pre-hung window as claimed in any one of the preceding claims, **characterised in that** the first and second displacement means are provided with a linear motor.

## Revendications

1. Fenêtre suspendue sur une caravane, un mobil-home ou similaire, désignés dans l'ensemble par caravane qui est montée sur le côté extérieur de la caravane et recouvrant par chevauchement une partie de cadre à l'opposé de la fenêtre, laquelle peut également être constituée de disques en plastique autoportants reliés les uns aux autres, y compris la partie de cadre, et une découpe de fenêtre un peu plus petite la plupart du temps rectangulaire avec des coins légèrement arrondis, avec la paroi de la caravane dans une position fermée de la fenêtre, en exerçant une pression de serrage par rapport à un joint circulaire dont la découpe intérieure est plus grande que la découpe de fenêtre et dont le bord extérieur est plus petit que la fenêtre, et comprenant au moins deux verrouillages manuels qui permettent une fixation de la fenêtre par rapport à deux parois latérales de la découpe de fenêtre avec conservation de la pression de serrage prévue, ainsi qu'une position ouverte standard de la fenêtre, dans laquelle un espace d'air est créé entre les bords de la fenêtre et de la paroi de la caravane lorsque les verrouillages manuels sont desserrés, **caractérisée en ce que** quatre verrouillages manuels (5a-5d) en mesure de garantir la position fermée de la fenêtre (1) pour la pression de serrage prédéfinie sont prévus,
**en ce que** lors du desserrage de l'ensemble des quatre verrouillages manuels (5a-5d), au moins la position ouverte standard (figure 3) de la fenêtre est présente, dans laquelle il est prévu en outre que le plan de la fenêtre se situe parallèlement au plan de la paroi de la caravane, et **en ce que** des premiers moyens de déplacement (7a, 7b) par rapport au côté intérieur de la fenêtre et des seconds moyens de déplacement (8a, 8b) coopérant avec les premiers moyens par rapport au côté extérieur de la paroi de la caravane sont fournis, les deux étant cependant prévus à l'extérieur de la découpe de fenêtre (2) de la paroi de la caravane, grâce à laquelle, à partir de la position ouverte standard (figure 3), un déplacement parallèle de la fenêtre latéralement vers la droite ou la gauche est rendu possible, jusqu'à ce que presque 90 % à 100 % de la découpe de fenêtre de la paroi de la caravane soient libérés.

2. Fenêtre suspendue selon la revendication 1, **caractérisée en ce que** lors du déplacement latéral de la fenêtre (1) vers la droite ou la gauche à partir de la position ouverte standard (figure 3) de la fenêtre, le déplacement maximal est défini par des moyens de limitation, comme des boulons ou similaires, et en particulier la direction de déplacement latérale, le sens de marche ou le contre-sens de marche de la caravane.

3. Fenêtre suspendue selon la revendication 1 ou 2, **caractérisée en ce que** le second moyen de déplacement (8a, 8b) est guidé par rapport au côté extérieur de la caravane par un mécanisme de pivotement assisté par un ressort (6), de sorte que dans la position ouverte de la fenêtre, celle-ci est en mesure d'occuper un écart prédéfini par rapport à la paroi de la caravane.

4. Fenêtre suspendue selon la revendication 3, **caractérisée en ce que** le mécanisme de pivotement est constitué de quatre mécanismes de pivotement individuels assistés par un ressort (6a-6d) fixés respectivement par rapport à un axe parmi deux axes imaginaires, perpendiculaires l'un à l'autre, qui traverse le centre de la découpe de fenêtre, sur le côté extérieur de la paroi de la caravane de manière approximativement symétrique, de sorte que les seconds moyens de déplacement (8a, 8b) conjointement avec les premiers moyens de déplacement (7a, 7b) permettent le déplacement latéral.

5. Fenêtre suspendue selon la revendication 1 ou 2, **caractérisée en ce que** le premier moyen de déplacement (7a, 7b) est relié à la fenêtre (1).

6. Fenêtre suspendue selon la revendication 4, **caractérisée en ce que** les mécanismes de pivotement individuels (6a-6d) sont placés conjointement avec le premier et le second moyen de déplacement (7a, b ; 8a, b) respectifs dans la position fermée de la fenêtre au-dessous du joint circulaire (4), sans que la fonction d'étanchéité ne soit altérée.

7. Fenêtre suspendue selon l'une quelconque des revendications précédentes, **caractérisée en ce que** les premier et second moyens de déplacement (7a, b ; 8a, b) sont formés par des rails profilés.

8. Fenêtre suspendue selon la revendication 5 ou 7, **caractérisée en ce que** les rails profilés du premier et du second moyen de déplacement sont reliés l'un à l'autre par un autre rail profilé, afin de former ainsi un moyen de déplacement de type globalement télescopique.

9. Fenêtre suspendue selon la revendication 8, **caractérisée en ce qu'**un rail de partie intérieure (8a, 8b), un rail de partie centrale et un rail de partie extérieure (7a, 7b) sont prévus, dans lequel le rail de partie centrale enserre par glissement le rail de partie intérieure et le rail de partie extérieure le rail de partie centrale.

10. Fenêtre suspendue selon l'une quelconque des revendications précédentes, **caractérisée en ce que** respectivement deux des mécanismes de pivotement individuels opposés peuvent être actionnés par un servomoteur.

11. Fenêtre suspendue selon l'une quelconque des revendications précédentes, **caractérisée en ce que** les premier et second moyens de déplacement sont pourvus d'un moteur linéaire.
